# EUROPÄISCHE PATENTSCHRIFT

(11) **EP 2 431 604 B1**
(45) Veröffentlichungstag und Bekanntmachung des Hinweises auf die Patenterteilung: **02.08.2017**
(21) Anmeldenummer: 11170494.6
(22) Anmeldetag: 12.04.2002
(51) Int. Cl.: F03D 7/00, F03D 9/00, G05D 22/02, B60H 1/32, H02J 3/38, H02P 9/02, F03D 80/00

(54) **Verfahren zur Steuerung einer Windenergieanlage**
Method for controlling a wind energy plant
Procédé pour commander une installation d'énergie éolienne

(30) Priorität: 20.04.2001 DE 10119625
(43) Veröffentlichungstag der Anmeldung: 21.03.2012
(62) Teilanmeldung aus: 02730152.2
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- WO-A1-01/21956
- DE-A1- 2 635 687
- DE-A1- 10 045 291
- FR-A- 2 728 514
- US-A- 4 262 210
- US-A- 4 387 290
- US-A- 5 806 763
- US-B1- 6 198 186

## Beschreibung

Die vorliegende Erfindung betrifft ein Verfahren zur Steuerung einer Windenergieanlage und eine Windenergieanlage, insbesondere zur Ausführung des Verfahrens.

Windenergieanlagen sind seit langer Zeit allgemein bekannt und werden als umweltfreundliche Energieerzeuger in jüngster Zeit vermehrt verwendet.

Dabei liegt es in der Natur der Sache, dass diese Anlagen den Witterungseinflüssen ausgesetzt sind. Eines der Probleme, das bei Windenergieanlagen eine große Bedeutung hat, ist Feuchtigkeit, da Windenergieanlagen mit ihren elektrischen Systemen davor weitgehend geschützt werden müssen.

Solche Anlagen können jedoch nicht hermetisch abgeschlossen werden , um ein Eindringen von Feuchtigkeit sicher zu vermeiden, so dass Feuchtigkeit von bestimmten Anlagenteilen durch eine weitere Kapselung wie einen Schrank ferngehalten werden muss. Insbesondere im Bereich der Gondel mit großen metallischen Massen, wie dem Generator ist jedoch eine solche Kapselung nicht möglich.

Andererseits führen aber gerade große Massen zu einem beträchtlichen Problem, wenn diese zum Beispiel über Nacht abgekühlt sind und nun die Temperatur in der Umgebung der Anlage ansteigt.

Da warme Luft mehr Feuchtigkeit speichern kann, als kalte Luft, dringt also diese mit Feuchtigkeit angereicherte warme Luft auch in die Gondel ein und trifft dort auf den bei Stillstand der Anlage noch kalten Generator. Die Feuchtigkeit schlägt sich dann auf dem Generator nieder und kondensiert zu Wasser, das dann in großer Menge auftreten kann.

Ein besonderes Problem ist dies bei Windenergieanlagen mit einem Ringgenerator, wo das Wasser in den Generator gelangt und dann beim Anfahren des Generators, wenn er mit Erreger-Energie beaufschlagt wird, zu beträchtlichen Schäden führen kann. In DE2635687 wird der Luftraum einer elektrischen Maschinen mit einem geson derten elektrischen Heizelement erwärmt, um die durch Betauen gebildete Kondens-flüssigkeit zu vermeiden. Aufgabe der vorliegenden Erfindung ist es daher, diese von dem Wasser ausgehende Gefahr zu beseitigen.

Diese Aufgabe wird mit einem Verfahren nach dem Anspruch 1 gelöst. Außerdem wird die Aufgabe gelöst durch eine Windenergieanlage der eingangs genannten Art mit einer Vorrichtung zum Kurzschließen des Stators, einer Steuerung mit wenigstens zwei Temperaturaufnehmern zum Aufnehmen der Temperatur des Generators und der Umgebungsluft, einer Vorrichtung zum Vergleichen der Temperaturen, so dass die Steuerung in Abhängigkeit von der Temperaturdifferenz den Stator des Generators kurzschließen und den Läufer mit einem vorgebbaren Erregerstrom beaufschlagen kann.

Alternativ oder in Ergänzung der vorbeschriebenen Lösung kann auch vorgesehen sein, dass innerhalb der Gondel einer Windenergieanlage, z. B. an Teilen des Generators oder anderen elektrisch empfindlichen Teilen ein Feuchtigkeits- und/oder Niederschlagssensor als Mittel zum Erfassen der sich dort eingestellten Feuchtigkeit bzw. des eingestellten Niederschlags vorgesehen ist und dass der von dem Sensor erfasste Wert in einer Steuereinrichtung verarbeitet wird und eine Erwärmung des Generators mit den in dieser Anmeldung beschriebenen Mitteln oder eine Erwärmung anderer Teile der Windenergieanlage erfolgt, wenn der gemessene Feuchtigkeits- und/oder Niederschlagswert über einem vorbestimmten Wert liegt.

Nachfolgend wird die Erfindung anhand der Figuren näher beschrieben. Dabei zeigen:
- Fig. 1: vereinfacht einen Stator und einen Läufer eines Generators;
- Fig. 2: ebenfalls einen Stator und einen Läufer eines Generators in einer alternativen Ausführungsform.

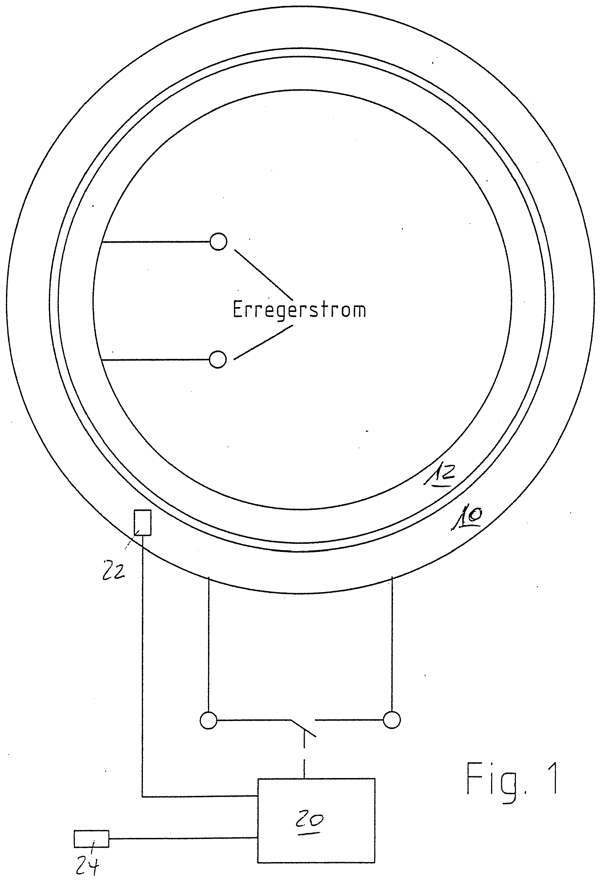

In Fig. 1 ist stark vereinfacht ein Generator mit einem Stator 10 und einem Läufer 12 dargestellt. Der Stator 10 weist Anschlussklemmen auf, an welchem im Normalbetrieb die elektrische Energie abgegriffen werden kann. Der Läufer 12 weist ebenfalls Anschlussklemmen auf, über welche der Erregerstrom zugeführt wird.

Zwischen den Anschlussklemmen des Stators 10 ist ein Kontakt dargestellt, der von der Steuerungseinrichtung 20 betätigt wird und die Stator-Anschlüsse kurzschließt.

Die Steuerungseinrichtung 20 erfasst über 2 Temperatursensoren 22, 24 die Temperatur des Generators (in diesem Fall des Stators) sowie die Temperatur in der Umgebung der Windenergieanlage.

Ist die mit dem Sensor 22 erfasste Temperatur des Stators geringer, als die mit dem Sensor 24 erfasste Temperatur der Umgebung, wird der Kontakt zwischen den Anschlussklemmen des Stators geschlossen und damit ein Kurzschluss herbeigeführt.

Sodann wird ein vorgebbarer Erregerstrom in den Läufer 12 über dessen Anschlussklemmen eingespeist. Durch die Höhe des in den Läufer 12 eingespeisten Erregerstromes kann die in dem Stator des Generators induzierte Leistung beeinflusst werden.

Wird der Stator kurzgeschlossen, ist die Stator-Spannung sehr klein und dabei fließt ein sehr hoher Strom (Kurzschlussstrom), der eine entsprechende Stromwärme im Stator entstehen lässt. Durch diese Stromwärme wird der Generator insgesamt aufgeheizt, so dass die Feuchtigkeit verdunstet. Selbst die Bildung von Kondenswasser wird mithin bei der Erfindung im optimierten Generatorgehäuse mittels messtechnischer Überwachung registriert und in diesem Fall startet die Windenergieanlage (beim Anfahren) automatisch im weitestgehend spannungslosen Erwärmungslauf, der die Restfeuchte im Generator verdampfen lässt. Um den Feuchtigkeitseintritt in die Gondel der Windenergieanlage so gering wie möglich zu gestalten, ist das gesamte Gondelgehäuse wasserdicht gestaltet, so dass durch die Außenverkleidung (der Gondel) das Eintreten von leitendem Material wie Feuchtigkeit verhindert wird.

In einer bevorzugten Weiterbildung der Erfindung wird die Aufheizung des Generators so lange fortgesetzt, bis die Temperatur des Generators die Temperatur der Umgebungsluft um ein vorgegebenes Maß überschreitet, bevor die Windenergieanlage in den Normalbetrieb übergeht, d.h., bevor der Kurzschluss des Stators aufgehoben und eine normale Erregerleistung eingespeist wird.

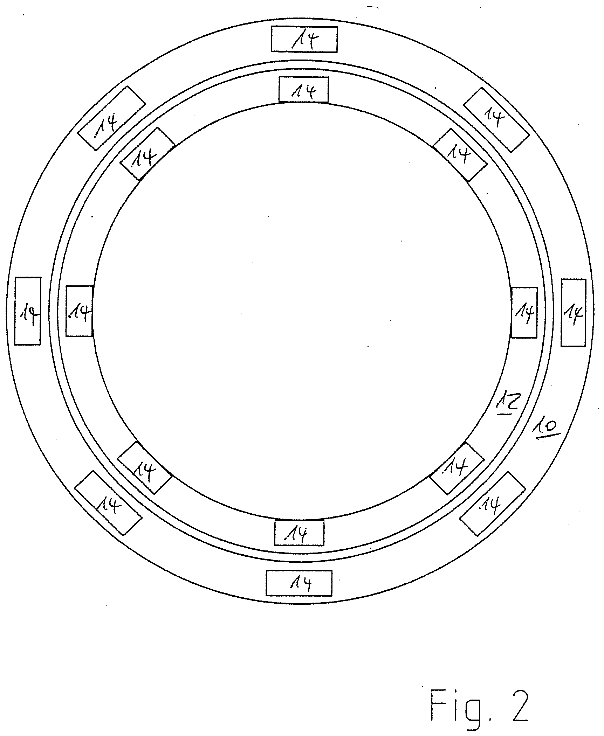

Fig. 2 zeigt eine alternative Ausführungsform des Generators mit Stator 10 und Läufer 12.

In dieser Ausführungsform sind an Stator 10 und Läufer 12 gleichförmig auf dem Umfang verteilte Heizwiderstände 14 angeordnet. Stellt nun die (nicht dargestellte) Steuerung 20 die Temperaturdifferenz zwischen dem Stator 10 des Generators und der Umgebungsluft fest, werden die Heizwiderstände 14 eingeschaltet und so der Generator aufgeheizt. Die Feuchtigkeit in dem Generator verdunstet und nach einer vorgegebenen Zeit oder bei Erreichen einer vorgegebenen Temperaturdifferenz zwischen der Temperatur von Stator 10 und Läufer 12 und der Umgebung kann der Normalbetrieb aufgenommen werden.

Eine eigene Heizung kann nicht nur für den Generator, sondern auch für andere elektrisch empfindliche Teile der Windenergieanlage in ihrem Innern vorgesehen sein. Eine solche Heizung wird regelmäßig wie die Generatorheizung gesteuert, d. h., dass eine Erwärmung dann erfolgt, wenn das zu wärmende Teil eine Temperatur aufweist, die geringer ist als die Außenumgebungstemperatur, so dass der Niederschlag von Feuchtigkeit an dem elektrischen Teil verhindert wird.

Schließlich ist es auch möglich, alternativ oder in Ergänzung zur Temperaturerfassung des Generators bzw. der Umgebungsluft einen (oder mehrere) Feuchtigkeits/Niederschlagssensor vorzusehen, welcher am Generator (oder anderen empfindlichen Teilen) angebracht ist und welcher die sich auf dem Generator niederschlagende Feuchtigkeit/Niederschläge erfasst und wenn dieser Sensor mit der Steuerungseinrichtung verbunden ist, wird automatisch eine Generatorheizung ausgelöst, wenn der mit dem Sensor gemessene Niederschlag einen bestimmten Wert überschreitet.

Schließlich wird auch vorgeschlagen, weitere verdunstungsunterstützende Mittel vorzusehen, falls häufiger das Problem auftreten könnte, dass sich ein Feuchtigkeitsniederschlag am Generator oder anderen elektrisch empfindlichen Teilen bildet. Zur Unterstützung einer Schnelltrocknung des Generators oder anderer elektrisch empfindlicher Teile kann auch ein wie ein Fön arbeitendes Gebläse vorgesehen werden, welches erwärmte Luft auf die jeweiligen Teile leitet, die zu trocknen sind. So können beispielsweise auch die normalerweise in jeder Windenergieanlage vorgesehenen Gebläse zur Zuführung von Frischluft einer Heizung nachgeordnet sein, so dass die zugeführte Frischluft erwärmt in das Innere der Generatorgondel gelenkt wird und einen Niederschlag von feuchter Luft an elektrisch empfindlichen Teilen, z. B. dem Generator, somit verhindert wird.

Die Erfindung der vorliegenden Anmeldung schließt auch ein, die sich auf oder am Generator oder anderen elektrischen Teilen der Windenergieanlage bildende Feuchtigkeit (Feuchtigkeitsniederschlag) auf jede erdenklich Weise nur festzustellen. Dies kann auch dadurch geschehen, dass an besonders empfindlichen Bereichen gemessen wird, ob sich dort oberflächlich ein Stromfluss einstellen kann, was nur dann möglich ist, wenn sich ein Feuchtigkeitsniederschlag gebildet hat.

## Patentansprüche

1. Verfahren zur Steuerung einer Windenergieanlage, welche einen Generator mit einem Stator und Läufer aufweist, zur Beseitigung eines Feuchtiakeitsniederschlages auf elektrisch empfindlichen Teilen der Windenergieanlage, insbesondere auf Teilen des Generators der Windenergieanlage, **gekennzeichnet durch** die Schritte:
- Erfassen der Temperatur des Generators und der Temperatur der Luft in der Umgebung der Windenergieanlage,
- Ermitteln der Temperaturdifferenz, und
- Aufheizen des Generators, wenn die Temperatur des Generators unterhalb der Temperatur der Umgebungsluft liegt, durch Kurzschließen des Generator-Stators und Beaufschlagen des Generator-Läufers mit einem vorgebbaren Erregerstrom.

2. Verfahren nach einem der vorstehenden Ansprüche,
**dadurch gekennzeichnet, dass** die Heizung des Generators für eine vorgegebene Zeit oder so lange erfolgt, bis die Temperatur des Generators die Umgebungstemperatur um ein vorgegebenes Maß überschreitet.

3. Windenergieanlage mit einem Generator der einen Stator und einen Läufer aufweist, insbesondere zur Ausführung des Verfahrens nach einem der vorstehenden Ansprüche,
**dadurch gekennzeichnet, dass** wenigstens zwei Temperaturaufnehmer vorgesehen sind, von denen der eine die Temperatur des Generators der Windenergieanlage oder anderer Teile der Windenergieanlage erfasst und der andere Temperaturaufnehmer die Temperatur in der Umgebung der Windenergieanlage erfasst, dass ferner eine Vergleichseinrichtung vorgesehen ist, die die Temperaturwerte der beiden Temperaturaufnehmer vergleicht und eine Erwärmung des Generators oder anderer Teile der Windenergieanlage erfolgt, wenn eine Temperaturdifferenz in den beiden aufgenommenen Temperaturen festgestellt wurde, wonach die Temperatur des Generators oder andere Teile innerhalb der Windenergieanlage unterhalb der Temperatur der Umgebungsluft liegt und
eine Vorrichtung zum Kurzschließen des Stators des Generators vorgesehen ist und
eine Steuerung mit wenigstens zwei Temperaturaufnehmern zum Aufnehmen der Temperatur des Generators und der Umgebungsluft, einer Vorrichtung zum Vergleichen der Temperaturen, so dass die Generator-Heizung in Abhängigkeit von der Temperaturdifferenz steuerbar ist.

4. Verfahren nach einem der vorhergehenden Ansprüche,
**dadurch gekennzeichnet, dass** eine Aufheizung des Generators erfolgt, wenn die Temperatur des Generators um einen vorbestimmten Wert unterhalb der Temperatur der Umgebungsluft oder der Temperatur in der Generatorgondel liegt.

5. Verfahren zur Steuerung einer Windenergieanlage zur Beseitigung eines Feuchtigkeitsniederschlaaes auf elektrisch empfindlichen Teilen der Windenergieanlage, insbesondere auf Teilen eines Generators der Windenergieanlage,
**gekennzeichnet durch** die Schritte:
- Messen/Erfassen eines Feuchtigkeitsniederschlags auf Teilen des Generators oder anderen elektrisch empfindlichen Teilen der Windenergieanlage und
- Aufheizen des Generators, wenn der Feuchtigkeitsniederschlag über einem vorbestimmten Wert liegt, durch Kurzschließen des Generator-Stators und Beaufschlagen des Generator-Läufers mit einem vorgebbaren Erregerstrom

6. Windenergieanlage zur Ausführung des Verfahrens nach einem der vorhergehenden Ansprüche,
**dadurch gekennzeichnet, dass** Mittel zum Messen/Erfassen der Feuchtigkeit und/oder eines Feuchtigkeitsniederschlags, der sich innerhalb einer Windenergieanlage bildet, vorgesehen ist, wobei die Mittel insbesondere die Feuchtigkeit und/oder den Feuchtigkeitsniederschlag an Teilen des Generators der Windenergieanlage oder anderen elektrisch empfindlichen Teilen der Windenergieanlage erfasst und eine Erwärmung des Generators oder anderer Teile der Windenergieanlage erfolgt durch Kurzschließen des Generator-Stators und Beaufschlagen des Generator-Läufers mit einem vorgebbaren Erregerstrom, wenn der gemessene Feuchtigkeits- und/oder Niederschlagswert einen vorbestimmten Wert überschreitet.

## Claims

1. Method for controlling a wind turbine which has a generator having a stator and a rotor for eliminating moisture condensation on electrically sensitive components of the wind turbine, in particular on components of the generator of the wind turbine, **characterised by** the steps of:
- detecting the temperature of the generator and the temperature of the air in the environment of the wind turbine,
- establishing the temperature difference, and
- heating the generator when the temperature of the generator is below the temperature of the ambient air by short-circuiting the generator stator and applying a predeterminable excitation current to the generator rotor.

2. Method according to the preceding claim,
**characterised in that** the heating of the generator is carried out for a predetermined time or until the temperature of the generator exceeds the ambient temperature by a predetermined amount.

3. Wind turbine having a generator which has a stator and a rotor, in particular for carrying out the method according to either of the preceding claims,
**characterised in that** at least two temperature sensors are provided, of which one detects the temperature of the generator of the wind turbine or other components of the wind turbine, and the other temperature sensor detects the temperature in the environment of the wind turbine, **in that** there is further provided a comparison device which compares the temperature values of the two temperature sensors and a heating of the generator or other components of the wind turbine is carried out when a temperature difference has been established in the two recorded temperatures, according to which the temperature of the generator or other components within the wind turbine is below the temperature of the ambient air, and a device for short-circuiting the stator of the generator is provided, and a control having at least two temperature sensors for recording the temperature of the generator and the ambient air, a device for comparing the temperatures so that the generator heating can be controlled in accordance with the temperature difference.

4. Method according to any one of the preceding claims,
**characterised in that** a heating of the generator is carried out when the temperature of the generator is below the temperature of the ambient air or the temperature in the generator pod by a predetermined value.

5. Method for controlling a wind turbine for eliminating a moisture condensation on electrically sensitive components of the wind turbine, in particular on components of a generator of the wind turbine,
**characterised by** the steps of:
- measuring/detecting a moisture condensation on components of the generator or other electrically sensitive components of the wind turbine, and
- heating the generator when the moisture condensation is above a predetermined value by short-circuiting the generator stator and applying a predeterminable excitation current to the generator rotor.

6. Wind turbine for carrying out the method according to any one of the preceding claims,
**characterised in that** a means for measuring/detecting the moisture and/or a moisture condensation which is formed within a wind turbine is provided, wherein the means detects in particular the moisture and/or the moisture condensation on components of the generator of the wind turbine or other electrically sensitive components of the wind turbine and a heating of the generator or other components of the wind turbine is carried out by short-circuiting the generator stator and applying a predeterminable excitation current to the generator rotor when the measured moisture and/or condensation value exceeds a predetermined value.

## Revendications

1. Procédé servant à commander une éolienne, qui présente un générateur pourvu d'un stator et d'un rotor, servant à éliminer le dépôt d'humidité sur des pièces électriquement sensibles de l'éolienne, en particulier sur des pièces du générateur de l'éolienne, **caractérisé par** les étapes consistant à :
- détecter la température du générateur et la température de l'air dans l'environnement de l'éolienne,
- déterminer la différence de température, et
- réchauffer le générateur quand la température du générateur est inférieure à la température de l'air ambiant en court-circuitant le stator de générateur et en soumettant le rotor de générateur à l'action d'un courant d'excitation pouvant être spécifié.

2. Procédé selon l'une quelconque des revendications précédentes,
**caractérisé en ce que** le chauffage du générateur est effectué pour une durée spécifiée ou jusqu'à ce que la température du générateur dépasse d'une mesure spécifiée la température ambiante.

3. Eolienne comprenant un générateur, qui présente un stator et un rotor, en particulier servant à exécuter le procédé selon l'une quelconque des revendications précédentes,
**caractérisée en ce que** sont prévus au moins deux capteurs de température, dont l'un détecte la température du générateur de l'éolienne ou d'autres pièces de l'éolienne et l'autre capteur de température détecte la température dans l'environnement de l'éolienne, **en ce qu'**est prévu en outre un dispositif de comparaison, qui compare les valeurs de température des deux capteurs de température, et **en ce qu'**un chauffage du générateur ou d'autres pièces de l'éolienne est effectué quand une différence de température dans les deux températures relevées a été constatée, la température du générateur d'autres pièces à l'intérieur de l'éolienne étant inférieure à la température de l'air ambiant, et
**en ce qu'**est prévu un dispositif servant à court-circuiter le stator du générateur, et
**en ce qu'**est prévue une commande comprenant au moins deux capteurs de température servant à relever la température du générateur et de l'air ambiant, un dispositif servant à comparer les températures de sorte que le chauffage de générateur peut être commandé en fonction de la différence de température.

4. Procédé selon l'une quelconque des revendications précédentes,
**caractérisé en ce qu'**un réchauffage du générateur est effectué quand la température du générateur est inférieure d'une valeur prédéfinie à la température de l'air ambiant ou à la température dans la gondole de générateur.

5. Procédé servant à commander l'éolienne servant à éliminer un dépôt d'humidité sur des pièces électriquement sensibles de l'éolienne, en particulier sur des pièces d'un générateur de l'éolienne,
**caractérisé par** les étapes consistant à :
- mesurer/détecter un dépôt d'humidité sur des pièces du générateur ou d'autres pièces électriquement sensibles de l'éolienne ; et
- réchauffer le générateur quand le dépôt d'humidité est supérieur à une valeur prédéfinie en court-circuitant le stator de générateur et en soumettant le rotor de générateur à l'action d'un courant d'excitation pouvant être spécifié.

6. Eolienne servant à exécuter le procédé selon l'une quelconque des revendications précédentes,
**caractérisée en ce que** sont prévus des moyens servant à mesurer/détecter l'humidité et/ou un dépôt d'humidité, qui se forme à l'intérieur de l'éolienne, dans laquelle les moyens détectent en particulier l'humidité et/ou le dépôt d'humidité sur des pièces du générateur de l'éolienne ou sur d'autres pièces électriquement sensibles de l'éolienne, et **en ce qu'**un chauffage du générateur ou d'autres pièces de l'éolienne est effectué en court-circuitant le stator de générateur et en soumettant le rotor de générateur à l'action d'un courant d'excitation pouvant être spécifié, quand la valeur mesurée d'humidité et/ou de dépôt dépasse une valeur prédéfinie.
